# EUROPEAN PATENT APPLICATION

(11) **EP 4 726 836 A1**
(43) Date of publication of application: **15.04.2026**
(21) Application number: 23940694.5
(22) Date of filing: 07.06.2023
(51) Int. Cl.: H01M 10/0567, H01M 4/131, H01M 4/525, H01M 4/66, H01M 10/052, H01M 10/0569

(54) **LITHIUM SECONDARY BATTERY**

(71) Applicant: TERAWATT TECHNOLOGY K.K., Yokohama-shi, Kanagawa 226-0026 (JP)
(72) Inventor: Oyama, Gosuke, Yokohama-shi, Kanagawa 226-0026 (JP); Takimoto, Kazuki, Yokohama-shi, Kanagawa 226-0026 (JP)
(74) Representative: FRKelly
(86) International application number: PCT/JP2023/021245
(87) International publication number: WO 2024/252593

(57) **Abstract**

The present invention provides a lithium secondary battery which is allowed to achieve both high safety and excellent performance stability at a high temperature. The present invention relates to a lithium secondary battery including a positive electrode that has a positive electrode current collector and a positive-electrode active material layer, a negative electrode that has a negative electrode current collector, an electrolyte solution, and a separator, in which the positive electrode current collector and/or the negative electrode current collector has a current collector film that includes a resin layer containing polyethylene terephthalate and a metal layer provided on each of both surfaces of the resin layer, the positive-electrode active material layer contains one or more compounds represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, - 0.2 ≤ α ≤ 0.15, and M is one or more elements selected from the group consisting of Mn, Al, V, Mg, Mo, Nb, Ti, Zr, Fe, Cu, Cr, Zn, F, and B), and the electrolyte solution contains a chain-like carbonate and/or a chain-like ether, vinylene carbonate, and lithium difluorophosphate.

## Description

### Technical Field

The present invention relates to a lithium secondary battery.

### Background Art

In recent years, a technology of converting natural energy such as sunlight or wind power into electric energy has attracted attention. In association with this fact, various secondary batteries have been developed as a power storage device that has high safety and can store a large amount of electric energy.

Among them, it is known that a lithium secondary battery in which charge/discharge are carried out by moving lithium ions between a positive electrode and a negative electrode exhibits a high voltage and a high energy density. As a typical lithium secondary battery, a lithium ion secondary battery (LIB) that has an active material capable of holding a lithium element in a positive electrode and a negative electrode and carries out charge/discharge by transfer of lithium ions between the positive-electrode active material and the negative-electrode active material is known.

For example, Patent Literature 1 discloses a power storage device including an anode, a cathode, at least one separator provided between the anode and the cathode, an electrolytic substance, at least one thin film-shaped current collector which is in contact with at least one of the anode and the cathode, at least one tab attached to the at least one thin film-shaped current collector, in which the tab is attached to the current collector through a connecting unit, the connecting unit electrically connects an exposed surface of the tab and the thin film-shaped current collector, at least one of the anode and the cathode is interposed between at least a part of the thin film-shaped current collector and the separator, and the current collector includes a conductive material that covers a non-conductive material base material, in which in an operation voltage of the power storage device, in a case of a short circuit, the current collector stops conduction, and a voltage is at least 2.0 volts.

In addition, Patent Literature 2 discloses a current collector that has a multilayer structure in which an insulating layer is sandwiched between conductive layers, where the current collector is characterized by having a folded-back region obtained by folding back an end part of the current collector twice or more in the same direction, in which the respective conductive layers sandwiching the insulating layer in the folded-back region are electrically connected to each other, and inner surfaces of the end parts of the current collectors that form the folded-back regions are spaced apart from each other or partially in contact with each other.

In addition, Patent Literature 3 discloses a lithium ion secondary battery characterized in that in a lithium ion secondary battery including a positive electrode obtained by attaching an active material to a current collector through a binding material, and a negative electrode, a current collector of at least one of the positive electrode and the negative electrode includes a low melting point layer that consists of a resin that melts in a case of abnormal heat generation of the battery, and a metal layer which is interposed between the low melting point layer and the active material and carries out exchange of charges with the active material.

### Citation List

### Patent Literatures

Patent Literature 1: PCT Japanese Translation Patent Publication No. 2022-527140
Patent Literature 2: Japanese Patent Application Laid-Open No. 2013-016321
Patent Literature 3: Japanese Patent Application Laid-Open No. H11-102711

### Summary of Invention

### Technical Problem

From the viewpoint of safety and lightness, in the current collectors described in Patent Literatures 1 to 3, a current collector film in which a metal layer is formed on both surfaces of a resin film is used, and as a material of the resin film, polyethylene terephthalate (PET) having excellent mechanical characteristics and excellent processability is preferable.

However, it has been found that such a problem that, in a case where a lithium secondary battery in a charged state is stored at a high temperature, a chemical reaction occurs between a chain-like carbonate and/or a chain-like ether, which is a component of the electrolyte solution, and PET, and thus the performance of the lithium secondary battery deteriorates, occurs. In particular, it has been found that such a problem that in a case where a positive-electrode active material in which a nickel ratio is equal to or larger than a certain level is used, the above-described deterioration is remarkable.

The present invention has been made in consideration of the above-described problems, and an object of the present invention is to provide a lithium secondary battery having high safety and excellent performance stability at a high temperature in a lithium secondary battery.

### Solution to Problem

A lithium secondary battery according to one embodiment of the present invention includes a positive electrode that has a positive electrode current collector and a positive-electrode active material layer, a negative electrode that has a negative electrode current collector, an electrolyte solution, and a separator, in which the positive electrode current collector and/or the negative electrode current collector has a current collector film that includes a resin layer containing polyethylene terephthalate and a metal layer provided on each of both surfaces of the resin layer, the positive-electrode active material layer contains one or more compounds represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B), and the electrolyte solution contains a chain-like carbonate and/or a chain-like ether, vinylene carbonate, and lithium difluorophosphate.

The inventors of the present invention have found that in a lithium secondary battery, the positive electrode current collector and/or the negative electrode current collector has high safety in a case of having a current collector film that includes a resin layer containing polyethylene terephthalate and a metal layer provided on each of both surfaces of the resin layer. In addition, it has been found that, even in a case where the positive-electrode active material layer contains one or more compounds represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B), and the electrolyte solution contains a chain-like carbonate and/or a chain-like ether, since the electrolyte solution contains vinylene carbonate and lithium difluorophosphate, a chemical reaction between a chain-like carbonate and/or a chain-like ether, which is a component of the electrolyte solution, and PET is suppressed, and thus it is possible to maintain the high performance of the lithium secondary battery even in a case where a lithium secondary battery in a charged state is stored at a high temperature. As a result, it is presumed that each of the above-described components is allowed to achieve both high safety and excellent performance stability at a high temperature in the lithium secondary battery. However, the factors thereof are not limited to those described above.

In the lithium secondary battery according to one embodiment of the present invention, it is preferable that the positive-electrode active material layer contains one or more compounds represented by a general formula: Li_{z}NiₓCo_{y}M_{1-x-y}O_{2+α} (here, 0.7 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B). According to such an aspect, the lithium secondary battery tends to have excellent performance stability at a high temperature.

In the lithium secondary battery according to one embodiment of the present invention, it is preferable that the electrolyte solution contains the chain-like carbonate, and the chain-like carbonate includes ethyl methyl carbonate and/or dimethyl carbonate. According to such an aspect, the lithium secondary battery tends to have more excellent performance stability at a high temperature.

In the lithium secondary battery according to one embodiment of the present invention, it is preferable that a content of the vinylene carbonate is 0.1% to 5.0% by mass with respect to a total amount of the electrolyte solution, and a content of the lithium difluorophosphate is 0.1% to 5.0% by mass with respect to the total amount of the electrolyte solution. According to such an aspect, the lithium secondary battery tends to have more excellent performance stability at a high temperature.

In the lithium secondary battery according to one embodiment of the present invention, it is preferable that the electrolyte solution further contains lithium hexafluorophosphate and/or lithium bis(fluorosulfonyl)imide. According to such an aspect, the lithium secondary battery tends to have more excellent performance stability at a high temperature.

### Advantageous Effect of Invention

According to the present invention, it is possible to provide a lithium secondary battery which is allowed to achieve both high safety and excellent performance stability at a high temperature.

### Brief Description of Drawings

[Figure 1] Figure 1 is an example of a schematic cross-sectional view of a lithium secondary battery according to one embodiment of the present invention.
[Figure 2] Figure 2 is an example of a schematic cross-sectional view of a positive electrode according to one embodiment of the present invention.
[Figure 3] Figure 3 is an example of a schematic cross-sectional view of a negative electrode according to one embodiment of the present invention.
[Figure 4] Figure 4 is another example of the schematic cross-sectional view of the lithium secondary battery according to one embodiment of the present invention.
[Figure 5] Figure 5 is another example of the schematic cross-sectional view of the negative electrode according to one embodiment of the present invention.

### Description of Embodiments

Hereinafter, embodiments of the present invention (hereinafter, referred to as "the present embodiment") will be described in detail with reference to the drawings as necessary. However, the present invention is not limited thereto, and various modifications can be made without departing from the scope of the present invention. It is noted that in the drawings, the same reference numerals are assigned to the same elements, and duplicate descriptions will be omitted. In addition, unless otherwise specified, the positional relationship such as up, down, left, and right is based on the positional relationship illustrated in the drawings. Further, the dimensional ratios in the drawings are not limited to the illustrated ratios.

### 1. Lithium secondary battery

The kind of the lithium secondary battery according to the present embodiment is not particularly limited as long as charge/discharge are carried out by an oxidation-reduction reaction of lithium, and examples thereof include an anode-free type lithium secondary battery, a lithium ion battery, a lithium metal battery, a lithium sulfur battery, a lithium oxygen battery, a lithium air battery, and the like.

The shape of the battery included in the lithium secondary battery according to the present embodiment is not particularly limited, and it may be, for example, a sheet type, a laminated sheet type, a shape of a thin type, a shape of a bottomed cylinder type, a shape of a bottomed square type, or the like. From the viewpoint of further effectively and reliably exhibiting the effect of the present embodiment, a sheet type, a laminated sheet type, or a shape of a thin type is preferable.

Hereinafter, the lithium secondary battery according to the present embodiment will be described in detail using, as an example, an anode-free type lithium secondary battery (hereinafter, also simply referred to as an "anode-free type battery" or "AFB") which is an example of the lithium secondary battery according to the present embodiment, as necessary.

### [Anode-free type lithium secondary battery]

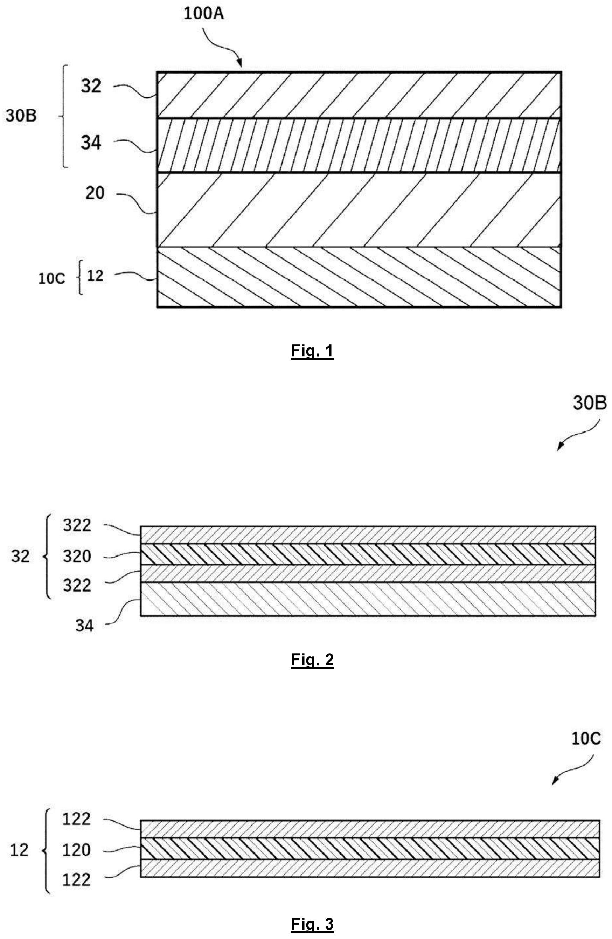

Figure 1 is a view illustrating an example of a cross-sectional structure of an anode-free type lithium secondary battery according to one embodiment of the present invention.

An anode-free type lithium secondary battery 100A according to one embodiment of the present invention which is illustrated in Figure 1 has a positive electrode 30B that has a positive electrode current collector 32 and a positive-electrode active material layer 34, a negative electrode 10C that has a negative electrode current collector 12, an electrolyte solution, and a separator 20, where the positive electrode current collector 32 and/or the negative electrode current collector 12 has a current collector film that includes a resin layer containing polyethylene terephthalate and a metal layer provided on each of both surfaces of the resin layer, the positive-electrode active material layer 34 contains one or more compounds represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B), and the electrolyte solution contains a chain-like carbonate and/or a chain-like ether, vinylene carbonate, and lithium difluorophosphate. It is noted that the lithium secondary battery according to the present embodiment, which includes the anode-free type lithium secondary battery 100A, is referred to as a lithium secondary battery 100.

As illustrated in Figure 2, the positive-electrode active material layer 34 may be formed on at least one surface of the positive electrode current collector 32 to form the positive electrode 30B, or the positive-electrode active material layer 34 may be formed on both surfaces of the positive electrode current collector 32 to form the positive electrode 30, which is not illustrated in the drawing. It is noted that in the present specification, the positive electrode according to the present embodiment, which includes the positive electrode 30B, is referred to as the positive electrode 30.

As illustrated in Figure 3, the negative electrode according to the present embodiment, which does not have the negative-electrode active material layer 14 and includes the negative electrode 10C that consists of only the negative electrode current collector 12, is referred to as the negative electrode 10.

In Figure 2, the positive electrode current collector 32 includes the resin layer 320 and the metal layer 322 provided on each of both surfaces of the resin layer 320; however, the positive electrode current collector 32 may include the metal layers 322 without having the resin layer 320. In addition, in Figure 3, the negative electrode current collector 12 includes the resin layer 120 and the metal layer 122 provided on each of both surfaces of the resin layer 120; however, the negative electrode current collector 12 may include the metal layer 122 without having the resin layer 120. In addition, at least one of the positive electrode current collector 32 and the negative electrode current collector 12 has a current collector film including a resin layer and a metal layer provided on each of both surfaces of the resin layer (hereinafter, also simply referred to as a "current collector film").

In a case where the positive electrode current collector and/or the negative electrode current collector has a current collector film, the resin layer can function so that the resin layer melts to block a short-circuit current inside the battery in a case where abnormal heat generation occurs in an overcharged state, a high temperature state, or the like. As a result, a rapid temperature rise inside the battery is suppressed, and the ignition of the battery is suppressed, which tends to contribute to high safety.

In addition, in a case where the positive electrode current collector and/or the negative electrode current collector has a current collector film, the specific gravity is small as compared with a case where the positive electrode current collector and/or the negative electrode current collector has only a metal layer, and thus the energy density per unit weight tends to be improved.

In the lithium secondary battery, a current collector film is often used in consideration of the above-described advantages. In addition, polyethylene terephthalate (PET) having excellent mechanical characteristics and excellent processability is often used as a material of the resin layer. In addition, in order to improve the performance (energy density, cycle characteristics, capacity retention rate, and the like) of the lithium secondary battery, a chain-like carbonate and/or a chain-like ether is often used as the electrolyte solution.

However, in a case where a lithium secondary battery in a charged state is stored at a high temperature, a chemical reaction occurs between a chain-like carbonate and/or a chain-like ether, which is a component of the electrolyte solution, and PET, and thus the performance of the lithium secondary battery tends to deteriorate. In particular, in a case where a positive-electrode active material in which a nickel ratio is equal to or larger than a certain level is used, the above-described deterioration tends to be remarkable.

As a result of intensive studies, the inventors of the present invention have found that, by containing vinylene carbonate and lithium difluorophosphate, a chemical reaction between a chain-like carbonate and/or a chain-like ether, which is a component of the electrolyte solution, and PET is suppressed, and thus it is possible to maintain the high performance of the lithium secondary battery, even in a case where a lithium secondary battery in a charged state is stored at a high temperature. The factors thereof are presumed as follows, which are not limited thereto.

It is presumed that, between PET and dimethyl carbonate which is an example of a chain-like carbonate which is a component of the electrolyte solution, such a redox shuttle reaction as follows occurs in the positive electrode and the negative electrode.

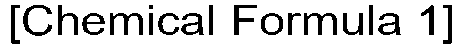

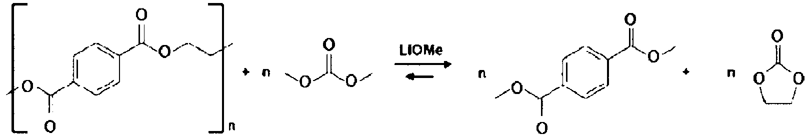

It is presumed that the above-described redox shuttle reaction is particularly remarkable in a case where a lithium secondary battery in a charged state is stored at a high temperature. In addition, it is presumed that in a case where the positive-electrode active material is a compound represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B), the above-described redox shuttle reaction is more remarkable.

It is presumed that the performance of the lithium secondary battery, such as a capacity retention rate, deteriorates since the composition of the component of the electrolyte solution changes, and the mass of the component of the electrolyte solution decreases due to the redox shuttle reaction described above. It is noted that it is presumed that the above-described redox shuttle reaction is not limited to a redox shuttle reaction in dimethyl carbonate, and the above-described redox shuttle reaction occurs even in chain-like carbonates such as ethyl methyl carbonate and ethylene carbonate, and chain-like ethers such as dimethoxyethane, diethoxyethane, dimethoxypropane, dimethoxybutane, and diethylene glycol dimethyl ether.

Here, it is presumed that in a case where vinylene carbonate is added as an additive to the electrolyte solution, the vinylene carbonate is decomposed at the negative electrode, and a coating film is generated on the negative electrode, which suppresses the occurrence of the above-described redox shuttle reaction at the negative electrode. **In** addition, it is presumed that in a case where lithium difluorophosphate is added as an additive to the electrolyte solution, the lithium difluorophosphate is decomposed at the positive electrode, and a coating film is generated on the positive electrode, which suppresses the occurrence of the above-described redox shuttle reaction at the positive electrode. As a result, it is presumed that the change in the composition of the component of the electrolyte solution and the decrease in the mass can be suppressed. As a result, it is presumed that high performance of the lithium secondary battery, such as a capacity retention rate, can be maintained even in a case where a lithium secondary battery in a charged state is stored at a high temperature.

As a result, it is considered that the lithium secondary battery according to the present embodiment is allowed to achieve both high safety and excellent performance stability at a high temperature. However, the factors thereof are not limited to those described above.

### 1.1. Positive electrode

The positive electrode 30 according to the present embodiment has the positive electrode current collector 32 and the positive-electrode active material layer 34.

The average thickness of the positive electrode 30 of the anode-free type battery is not particularly limited; however, it is, for example, 20 µm or more and 100 µm or less, 30 µm or more and 80 µm or less, or 40 µm or more and 70 µm or less. However, the average thickness of the positive electrode 30 can be appropriately adjusted according to the desired capacity of the battery.

### 1.1.1. Positive electrode current collector

The positive electrode current collector 32 according to the present embodiment may have a current collector film that includes a resin layer 320 containing polyethylene terephthalate and metal layer 322 provided on each of both surfaces of the resin layer 320, or it may have the metal layer 322 without having the resin layer 320. In a case where the positive electrode current collector 32 according to the present embodiment includes a current collector film, the metal layer 322 is formed on the surfaces of both sides of the resin layer 320 by vapor deposition, sputtering, electrolytic plating, or bonding with an adhesive agent or the like.

### 1.1.1.1. Resin layer

The resin layer 320 of the positive electrode current collector 32 according to the present embodiment is an insulator, and it prevents the metal layer 322 provided on each of both surfaces of the resin layer 320 from being in conduction with each other. The resin that constitutes the resin layer 320 is not particularly limited; however, it may be composed of, for example, a sheet-shaped (film-shaped) or fibrous resin. The resin includes polyethylene terephthalate (PET) and may further include other resins. Examples of the other resins include a polyolefin resin such as polyethylene or polypropylene, and a thermoplastic resin such as polystyrene, polyvinyl chloride, or polyamide. One kind of the other resins may be used alone, or two or more kinds thereof may be used in combination.

The resin layer 320 may contain other additives as appropriate in addition to the above-described resin, depending on the desired physical properties. The additive is not particularly limited, and examples thereof include a coloring agent, a flame retardant, a surfactant, and the like.

The content of the resin is not particularly limited; however, for example, it may be 60% by mass or more and 100% by mass or less, may be 80% by mass or more and 100% by mass or less, may be 90% by mass or more and 100% by mass or less, or may be 95% by mass or more and 100% by mass or less, or may be 100% by mass with respect to the total amount of the resin layer 320.

The content of the PET is not particularly limited; however, for example, it may be 60% by mass or more and 100% by mass or less, may be 80% by mass or more and 100% by mass or less, may be 90% by mass or more and 100% by mass or less, or may be 95% by mass or more and 100% by mass or less, or may be 100% by mass with respect to the total amount of the resin layer 320.

The content of the PET is not particularly limited; however, for example, it may be 80% by mass or more and 100% by mass or less, may be 85% by mass or more and 100% by mass or less, may be 90% by mass or more and 100% by mass or less, may be 95% by mass or more and 100% by mass or less, may be 98% by mass or more and 100% by mass or less, or may be 100% by mass with respect to the total amount of the resin.

The thickness of the resin layer 320 is not particularly limited; however, it is, for example, 2 µm or more and 15 µm or less, 3 µm or more and 12 µm or less, or 4 µm or more or 10 µm or less.

### 1.1.1.2. Metal layer

The metal layer 322 of the positive electrode current collector 32 according to the present embodiment is in physical and/or electrical contact with the positive-electrode active material layer 34 and functions to transfer electrons to and from the positive-electrode active material layer 34. The metal layer 322 is composed of a conductor such as a metal that does not react with lithium in a battery. The metal that constitutes the metal layer 322 is not particularly limited; however, it is at least one selected from the group consisting of aluminum, titanium, stainless steel, nickel, and alloys thereof. Among these, aluminum or an aluminum alloy is preferable, and aluminum is particularly preferable. One kind of the metal may be used alone, or two or more kinds thereof may be used in combination. It is noted that in the present specification, the phrase "metal that does not react with lithium" means a metal that does not react with a lithium ion or a lithium metal to form an alloy under the operating conditions of the lithium secondary battery.

In a case where the positive electrode current collector 32 has a current collector film, the thickness of the metal layer 322 is not particularly limited; however, it is, for example, 0.1 µm or more and 4.0 µm or less, 0.2 µm or more and 3.0 µm or less, 0.3 µm or more and 2.5 µm or less, or 0.4 µm or more and 2.0 µm or less.

In a case where the positive electrode current collector 32 has the metal layer 322 without having the resin layer 320, the thickness of the metal layer 322 is not particularly limited; however, it is, for example, 4.0 µm or more and 20.0 µm or less, 6.0 µm or more and 17.5 µm or less, or 8.0 µm or more and 15.0 µm or less.

### 1.1.2. Positive-electrode active material

The positive-electrode active material according to the present embodiment is not particularly limited; however, for example, the positive-electrode active material is contained in a positive electrode active material composition containing a binder, a conductive auxiliary agent, a positive-electrode sacrificial agent, and other additives, and the positive electrode active material composition is applied onto at least one surface or both surfaces of the positive electrode current collector 32, and then press molding is carried out, whereby the positive-electrode active material layer 34 is disposed on at least one surface or both surfaces of the positive electrode current collector 32.

The method of disposing the positive-electrode active material layer 34 on the positive electrode current collector 32 is not limited to press molding, and examples thereof include a method of allowing a positive electrode active material composition to contain a thermosetting compound and curing the positive electrode active material composition by heating; a method of allowing a positive electrode active material composition to contain a photocurable compound and curing the positive electrode active material composition by irradiation with light; a method of curing a positive electrode active material composition as a two-component curable composition by mixing the two components; and the like.

The positive-electrode active material layer 34 according to the present embodiment contains one or more compounds represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B).

In addition, it is preferable that the positive-electrode active material layer 34 contains one or more compounds represented by a general formula: Li_{z}NiₓCo_{y}M_{1-x-y}O_{2+α} (here, 0.7 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B). In a case where the above-described compound having a high nickel ratio is contained as a positive-electrode active material, the energy density of the lithium secondary battery tends to be further improved. In addition, as the nickel ratio increases, the above-described redox shuttle reaction is more likely to occur; however, in a case where the electrolyte solution contains an additive which will be described below in detail, the reaction is suppressed, and the electrolyte solution tends to have excellent performance stability at a high temperature.

The positive-electrode active material may include other positive-electrode active materials in addition to the above-described compounds. The positive-electrode active material is a material that causes an electrode reaction in a positive electrode, that is, an oxidation reaction and a reduction reaction. Specifically, examples of the other positive-electrode active materials according to the present embodiment include a host material of a lithium element (typically, a lithium ion). Such other positive-electrode active materials are not particularly limited; however, examples thereof include a metal oxide and a metal phosphate. The metal oxide is not particularly limited, and examples thereof include a cobalt oxide-based compound, a manganese oxide-based compound, a nickel oxide-based compound, and the like. The metal phosphate is not particularly limited, and examples thereof include an iron phosphate-based compound and a cobalt phosphate-based compound. Typical examples of the other positive-electrode active materials include LiCoO₂, LiNiₓMn_{y}O (x + y = 1), LiNiO₂, LiMn₂O₄, LiFePO, LiCoPO, LiFeOF, LiNiOF, and TiS₂. One kind of other positive-electrode active material may be used alone, or two or more kinds thereof may be used in combination.

The content of the positive-electrode active material is not particularly limited; however, it is, for example, 60% by mass or more and 100% by mass or less, 70% by mass or more and 99% by mass or less, 80% by mass or more and 98% by mass or less, 85% by mass or more and 97% by mass or less, or 90% by mass or more and 96% by mass or less with respect to the total amount of the positive electrode active material composition.

### 1.1.3. Binder

The positive electrode active material composition according to the present embodiment may contain a binder. In a case where the positive electrode active material composition according to the present embodiment contains a binder, the positive-electrode active material layer 34 is likely to be more easily bound to the positive electrode current collector 32, and in addition, the flexibility is improved after the positive-electrode active material layer 34 is disposed on the positive electrode current collector 32.

The binder according to the present embodiment is not particularly limited, and examples thereof include polyvinylidene fluoride; a modified polyvinylidene fluoride obtained by introducing a functional group such as a hydroxyl group, an amino group, a carbonyl group, a carboxyl group, a phenyl group, or a methyl group into polyvinylidene fluoride; polytetrafluoroethylene; a modified polytetrafluoroethylene obtained by introducing, into polytetrafluoroethylene, a functional group such as a hydroxyl group, an amino group, a carbonyl group, a carboxyl group, a phenyl group, or a methyl group; a block copolymer, a random copolymer, or a graft copolymer, which has tetrafluoroethylene as a constitutional unit; styrene butadiene rubber; carboxymethyl cellulose; an acrylic resin; a polyimide resin; and the like. One kind of the binder may be used alone, or two or more kinds thereof may be used in combination.

The content of the binder is not particularly limited; however, it is, for example, 0.5% by mass or more and 10.0% by mass or less, 1.0% by mass or more and 8.0% by mass or less, or 2.0% by mass or more and 6.0% by mass or less with respect to the total amount of the positive electrode active material composition.

### 1.1.4. Conductive auxiliary agent

The positive electrode active material composition according to the present embodiment may contain a conductive auxiliary agent. The conductive auxiliary agent is not particularly limited, and examples thereof include carbon black, singlewalled carbon nanotube (SWCNT), multi-walled carbon nanotube (MWCNT), carbon nanofiber (CF), and acetylene black. One kind of the conductive auxiliary agent may be used alone, or two or more kinds thereof may be used in combination.

The content of the conductive auxiliary agent is not particularly limited; however, it is, for example, 0.5% by mass or more and less than 30.0% by mass with respect to the total amount of the positive electrode active material composition.

### 1.1.5. Positive-electrode sacrificial agent

The positive electrode active material composition according to the present embodiment may contain a positive-electrode sacrificial agent. The positive-electrode sacrificial agent according to the present embodiment is a lithiumcontaining compound that causes an oxidation reaction and does not substantially cause a reduction reaction in a charge/discharge potential range of a positive-electrode active material. In a case where the positive electrode contains a positive-electrode sacrificial agent, the positive-electrode active material and the positive-electrode sacrificial agent release lithium ions and cause an oxidation reaction in a case where a lithium secondary battery including the positive electrode is subjected to initial charging, and then electrons are released to the negative electrode through the external circuit. As a result, lithium ions derived from the positive-electrode active material and the positive-electrode sacrificial agent are deposited on the surface of the negative electrode. In addition, in a case where such a lithium secondary battery is discharged after initial charging is completed (that is, after being subjected to initial discharging), a lithium metal deposited on the negative electrode surface is electrolytically dissolved, and electrons move from the negative electrode to the positive electrode through the external circuit. In association with this fact, the positive-electrode active material receives lithium ions and causes a reduction reaction, whereas the positive-electrode sacrificial agent does not substantially cause a reduction reaction within the range of the discharging potential of the positive-electrode active material, which makes it substantially impossible to return to a state before the oxidation reaction occurs. As a result, in a case where the lithium secondary battery is discharged after initial charging, a lithium metal derived from the positive-electrode active material is electrolytically dissolved from the negative electrode, whereas most of the lithium metal derived from the positive-electrode sacrificial agent remains on the negative electrode, and thus a part of the lithium metal remains on the negative electrode even after the completion of the discharging of the battery. The residual lithium metal serves as a scaffold in a case where further lithium metal is deposited on the negative electrode in the charging step that follows the initial discharging, and thus the lithium metal is likely to be uniformly deposited on the negative electrode in the charging step after the initial discharging. As a result, the lithium secondary battery tends to have excellent cycle characteristics.

The positive-electrode sacrificial agent is not particularly limited, and examples thereof include a lithium oxide such as Li₂O₂; a lithium nitride such as LisN; a lithium sulfide-based solid solution such as Li₂S-P₂S₅, Li₂S-LiCl, Li₂S-LiBr, or Li₂S-Lil; an iron-based lithium oxide such as Li₁₊ₓ(Ti_{1-y}Fe_{y})₁₋ₓO₂ (0 < x ≤ 0.25, 0.4 < y ≤ 0.9), Li₂₋ₓTi_{1-z}Fe_{z}O_{3-y} (0 ≤ x < 2, 0 ≤ y ≤ 1, 0.05 ≤ z ≤ 0.95), or Li₅FeO₄; and the like. One kind of the positive-electrode sacrificial agent may be used alone, or two or more kinds thereof may be used in combination.

The content of the positive-electrode sacrificial agent is not particularly limited; however, it is, for example, 1.0% by mass or more and 30.0% by mass or less, 2.0% by mass or more and 20.0% by mass or less, or 3.0% by mass or more and 15.0% by mass or less with respect to the total amount of the positive electrode active material composition.

In addition, the total amount of the positive-electrode active material and the positive-electrode sacrificial agent is not particularly limited; however, it is, for example, 60% by mass or more and 100% by mass or less, 70% by mass or more and 99% by mass or less, 80% by mass or more and 98% by mass or less, 85% by mass or more and 97% by mass or less, or 90% by mass or more and 96% by mass or less with respect to the total amount of the positive electrode active material composition.

### 1.1.6. Manufacturing method for positive electrode

The positive electrode 30 according to the present embodiment is not particularly limited; however, it is manufactured, for example, as follows. The metal layer 322 is formed on the surfaces of both sides of the resin layer 320 by vapor deposition, sputtering, electrolytic plating, or bonding with an adhesive agent or the like, whereby a current collector film is formed to obtain the positive electrode current collector 32 according to the present embodiment. Then, as necessary, the positive-electrode active material, the binder, the positive-electrode sacrificial agent, which are described above, and other additives are mixed with each other to obtain a positive electrode active material composition. The positive-electrode active material or the obtained positive electrode active material composition is applied onto both surfaces or one surface of the positive electrode current collector 32, and press molding is carried out to form the positive-electrode active material layer 34 on both surfaces or one surface of the positive electrode current collector 32, thereby obtaining a molded body. The obtained molded body is punched into a predetermined size by punching processing to obtain the positive electrode 30 according to the present embodiment.

In addition, in the above-described manufacturing method, a positive electrode current collector 32 having the metal layer 322 without having the resin layer 320 can also be used instead of the positive electrode current collector 32 having the current collector film.

### 1.2. Negative electrode

The negative electrode 10 according to the present embodiment has the negative electrode current collector 12.

### 1.2.1. Negative electrode current collector

The negative electrode current collector 12 according to the present embodiment may have a current collector film that includes a resin layer 120 containing polyethylene terephthalate and metal layer 122 provided on each of both surfaces of the resin layer 120, or it may have the metal layer 122 without having the resin layer 120. In a case where the negative electrode current collector 12 according to the present embodiment contains a current collector film, the metal layer 122 is formed on the surfaces of both sides of the resin layer 120 by vapor deposition, sputtering, electrolytic plating, or bonding with an adhesive agent or the like.

### 1.2.1.1. Resin layer

The resin layer 120 of the negative electrode current collector 12 according to the present embodiment is an insulator, and it prevents the metal layer 122 provided on each of both surfaces of the resin layer 120 from being in conduction with each other. The resin that constitutes the resin layer 120 is not particularly limited; however, it may be composed of, for example, a sheet-shaped (film-shaped) or fibrous resin. The resin includes polyethylene terephthalate (PET) and may further include other resins. Examples of the other resins include the same ones as those of the resin layer 320 of the positive electrode current collector 32. In addition, the resin layer 120 may contain other additives as appropriate in addition to the above-described resin, depending on the desired physical properties, and examples of the other additives include the same ones as those of the resin layer 320 of the positive electrode current collector 32.

The content of the resin and the content of the PET may be the same as the content of the resin and the content of the PET in the positive electrode current collector 32.

The thickness of the resin layer 120 may be the same as the thickness of the resin layer 320 in the positive electrode current collector 32.

### 1.2.1.2. Metal layer

The metal that constitutes the metal layer 122 of the negative electrode current collector 12 according to the present embodiment is not particularly limited as long as it can be used as a current collector, and examples thereof include those consisting of at least one selected from the group consisting of copper, nickel, titanium, iron, and a metal that does not react with lithium, as well as an alloy thereof and stainless steel (SUS), and preferred examples thereof include those consisting of at least one selected from the group consisting of copper, nickel, and an alloy thereof, as well as SUS.

In a case where the negative electrode current collector 12 has a current collector film, the thickness of the metal layer 122 may be the same as the thickness of the metal layer 322 in the positive electrode current collector 32 having a current collector film.

In a case where the negative electrode current collector 12 has the metal layer 122 without having the resin layer 120, the thickness of the metal layer 122 may be the same as the thickness of the metal layer 322 in the positive electrode current collector 32 that has the metal layer 322 but does not have the resin layer 320.

### 1.2.2. Negative-electrode active material

The negative-electrode active material is a material that causes an electrode reaction in a negative electrode, that is, an oxidation reaction and a reduction reaction. Specific examples of the negative-electrode active material according to the present embodiment include a lithium metal and a host material of a lithium element (a lithium ion or a lithium metal). The host material of the lithium element means a material which is provided to hold a lithium ion or a lithium metal at a negative electrode. Examples of such a holding mechanism include intercalation, alloying, and absorption of metal clusters, and the like, and the holding mechanism is typically, intercalation.

The negative-electrode active material is not particularly limited, and examples thereof include a lithium metal, an alloy containing lithium metal, a carbon-based material, and a metal oxide, as well as a metal which is alloyed with lithium, an alloy containing the metal, and the like. The carbon-based material is not particularly limited, and examples thereof include graphene, graphite, hard carbon, carbon nanotube, and the like. The metal oxide is not particularly limited, and examples thereof include a titanium oxide-based compound, a cobalt oxide-based compound, and the like. The metal which is alloyed with the above-described lithium is not particularly limited, and examples thereof include silicon, germanium, tin, lead, aluminum, and gallium.

In the anode-free type lithium secondary battery according to the present embodiment, the negative electrode 10 consists of the negative electrode current collector 12 having no negative-electrode active material, and an electrolyte solution described later is used as the electrolyte solution.

In the anode-free type battery, before the initial charging of the battery, the negative electrode 10 does not have a negative-electrode active material and consists of only the negative electrode current collector 12. As a result, after the initial charging of the battery, the lithium metal is deposited on the negative electrode 10, and the deposited lithium metal is electrolytically dissolved to carry out charge/discharge. As a result, the anode-free type battery has such an advantage that the energy density is high in principle because the volume occupied by the negative-electrode active material and the mass of the negative-electrode active material are reduced, and the volume and the mass of the entire battery are reduced.

In the anode-free type battery of the present specification, the phrase "the negative electrode does not have a negative-electrode active material" means that the negative electrode does not have a negative-electrode active material or substantially does not have a negative-electrode active material. The fact that the negative electrode does not substantially have a negative-electrode active material means that the content of the negative-electrode active material in the negative electrode is 10.0% by mass or less with respect to the entire negative electrode. The content of the negative-electrode active material in the negative electrode 10 of the anode-free type battery is preferably 5.0% by mass or less, 1.0% by mass or less, 0.1% by mass or less, or 0.0% by mass with respect to the entire negative electrode 10. In a case where the negative electrode 10 does not have a negative-electrode active material or the content of the negative-electrode active material in the negative electrode 10 is within the above-described range, the energy density of the lithium secondary battery is high.

In addition, in the anode-free type battery of the present specification, the phrase "the battery is before initial charging" means a state from the assembly of the battery to the first charging. In addition, the term "the battery is at the end of discharging" means that the voltage of the battery is in a state of preferably 1.0 V or more and 3.8 V or less, or 1.0 V or more and 3.0 V or less.

In the anode-free type battery according to the present embodiment, in a case where the voltage of the battery is 1.0 V or more and 3.5 V or less, the content of the lithium metal may be 10.0% by mass or less with respect to the entire negative electrode 10 (preferably 5.0% by mass or less and 1.0% by mass or less); in a case where the voltage of the battery is 1.0 V or more and 3.0 V or less, the content of the lithium metal may be 10.0% by mass or less with respect to the entire negative electrode 10 (preferably 5.0% by mass or less and 1.0% by mass or less); or in a case where the voltage of the battery is 1.0 V or more and 2.5 V or less, the content of the lithium metal may be 10.0% by mass or less with respect to the entire negative electrode 10 (may be preferably 5.0% by mass or less and 1.0% by mass or less).

In addition, in the anode-free type battery according to the present embodiment, a ratio M_{3.0}/M_{4.2} of a mass M_{3.0} of the lithium metal deposited on the negative electrode 10 in a state where the voltage of the battery is 3.0 V to a mass M_{4.2} of the lithium metal deposited on the negative electrode 10 in a state where the voltage of the battery is 4.2 V is preferably 40.0% or less, 38.0% or less, or 35.0% or less. The ratio M_{3.0}/M_{4.2} may be 1.0% or more, may be 2.0% or more, may be 3.0% or more, or may be 4.0% or more.

The average thickness of the negative electrode 10 of the anode-free type battery is not particularly limited; however, it is, for example, 3.0 µm or more and 30.0 µm or less. From the viewpoint of reducing the volume occupied by the negative electrode 10 in the anode-free type battery and improving the energy density, the average thickness of the negative electrode 10 is preferably 4.0 µm or more and 20.0 µm or less, 5.0 µm or more and 18.0 µm or less, or 6.0 µm or more and 15 µm or less.

### 1.2.3. Manufacturing method for negative electrode

The negative electrode 10 according to the present embodiment is not particularly limited; however, it is manufactured, for example, as follows. The metal layer 122 is formed on the surfaces of both sides of the resin layer 120 by vapor deposition, sputtering, electrolytic plating, or bonding with an adhesive agent or the like, whereby a current collector film is formed to obtain the negative electrode current collector 12 according to the present embodiment. In the anode-free type lithium secondary battery, since the negative-electrode active material is not provided, the negative electrode current collector 12 can be used to form the negative electrode 10 according to the present embodiment.

In addition, in the above-described manufacturing method, a negative electrode current collector 12 having the metal layer 122 without having the resin layer 120 can also be used instead of the negative electrode current collector 12 having the current collector film.

### 1.3. Separator

The separator 20 according to the present embodiment is not particularly limited as long as it has a function of physically and/or electrically isolating the positive electrode 30 and the negative electrode 10 and a function of ensuring the ion conductivity of lithium ions. Examples of such a separator include a porous member having insulating properties, a polymer electrolyte, a gel electrolyte, and an inorganic solid electrolyte, and typical examples thereof include at least one selected from the group consisting of a porous member having insulating properties, a polymer electrolyte, and a gel electrolyte. In addition, as the separator 20, one kind of member may be used alone, or two or more kinds of members may be used in combination.

As the separator 20, it is preferable that one kind of porous member having insulating properties, polymer electrolyte, or gel electrolyte is used alone, or two or more kinds thereof are used in combination. It is noted that in a case where the porous member having insulating properties is used alone as the separator 20, the lithium secondary battery needs to further include an electrolyte solution.

The above-described polymer electrolyte is not particularly limited, and examples thereof include a solid polymer electrolyte that mainly contains a polymer and an electrolyte, and a semi-solid polymer electrolyte that mainly contains a polymer, an electrolyte, and a plasticizer.

The gel electrolyte is not particularly limited; however, examples thereof include a gel electrolyte that mainly contains a polymer and a liquid electrolyte (that is, a solvent and an electrolyte).

The polymer that can be contained in the polymer electrolyte and the gel electrolyte is not particularly limited, and examples thereof include a polymer that contains a functional group containing an oxygen atom, such as an ether and an ester, and a polar group such as a halogen group or a cyano group. Specific examples thereof include a resin having an ethylene oxide unit in a main chain and/or a side chain, such as polyethylene oxide (PEO), a resin having a propylene oxide unit in a main chain and/or a side chain, such as polypropylene oxide (PPO), an acrylic resin, a vinyl resin, an ester resin, a nylon resin, polyvinylidene fluoride (PVdF), polyacrylonitrile (PAN), polysiloxane, polyphosphazene, polymethyl methacrylate, polyamide, polyimide, aramid, polylactic acid, polyurethane, polyacetal, polysulfone, polyethylene carbonate, polypropylene carbonate, and polytetrafluoroethylene. One kind of such a resin as described above may be used alone, or two or more kinds thereof may be used in combination.

Examples of the electrolyte included in the polymer electrolyte and the gel electrolyte include salts of Li, Na, K, Ca, and Mg, and the like. Typically, in the present embodiment, the polymer electrolyte and the gel electrolyte contain a lithium salt.

The lithium salt is not particularly limited, and examples thereof include Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄, and at least one selected from the group consisting of LiPF₆, LiN(SO₂F)₂, LiN(SO₂CF₃)₂, and LiN(SO₂CF₃CF₃)₂ is preferable. One kind of such a salt or lithium salt as described above may be used alone, or two or more kinds thereof may be used in combination.

The blending ratio between the polymer and the lithium salt in the polymer electrolyte and the gel electrolyte may be determined by the ratio of the polar group of the polymer to the lithium atom of the lithium salt. For example, the blending ratio may be determined according to the ratio ([Li]/[O]) of the number of lithium atoms in the lithium salt to the number of oxygen atoms in the polymer in a case where the polymer has an oxygen atom. In the polymer electrolyte and the gel electrolyte, the blending ratio between the polymer and the lithium salt can be adjusted so that the above-described ratio ([Li]/[O]) is, for example, 0.02 or more and 0.20 or less, 0.03 or more and 0.15 or less, or 0.04 or more and 0.12 or less.

The solvent contained in the gel electrolyte is not particularly limited; however, for example, a solvent that can be contained in the electrolyte solution described later can be used alone, or two or more kinds thereof can be used in combination. Examples of the preferred solvent are also the same as those in the electrolyte solution described later.

The plasticizer contained in the semi-solid polymer electrolyte is not particularly limited, and examples thereof include the same component as the solvent which can be contained in the gel electrolyte, and various oligomers.

In a case where the separator 20 includes the porous member having insulating properties, the pores of such a member are filled with a material having ion conductivity, whereby such a member exhibits ion conductivity. As a result, in the present embodiment, the filling is carried out with, for example, the electrolyte solution according to the present embodiment, a gel electrolyte containing the electrolyte solution according to the present embodiment, or the like.

The material that constitutes the porous member having insulating properties is not particularly limited, and examples thereof include a polymer material having insulating properties, and specific examples thereof include polyethylene (PE) and polypropylene (PP). That is, the separator 20 may be a porous polyethylene (PE) membrane, a porous polypropylene (PP) membrane, or a laminated structure thereof.

The separator 20 may be coated with a separator coating layer. The separator coating layer may coat both surfaces of the separator 20 or may coat only one surface. From the viewpoint of improving the cycle characteristics of the lithium secondary battery in the present embodiment, it is preferable to coat both surfaces of the separator 20. It is noted that the separator coating layer in the present embodiment is a film-shaped coating layer which is uniformly continuous, for example, a film-shaped coating layer which is uniformly continuous in an area of 50% or more of the surface of the separator 20.

The separator coating layer is not particularly limited, and for example, and it is preferably a separator containing a binder such as polyvinylidene fluoride (PVdF), a mixture of styrene butadiene rubber and carboxymethyl cellulose (SBR-CMC), or polyacrylic acid (PAA). In the separator coating layer, inorganic particles such as silica, alumina, titania, zirconia, or magnesium hydroxide may be added to the above-described binder.

The average thickness of the separator 20 including the separator coating layer is not particularly limited; however, it is, for example, 3.0 µm or more and 40.0 µm or less. In the lithium secondary battery, from the viewpoint of reducing the volume occupied by the separator 20 in the battery while reliably isolating the positive electrode 30 from the negative electrode 10, the average thickness of the separator 20 is preferably 5.0 µm or more and 30.0 µm or less, 7.0 µm or more and 10.0 µm or less, or 10.0 µm or more and 20.0 µm or less.

### 1.4. Electrolyte solution

The electrolyte solution according to the present embodiment contains a chain-like carbonate and/or a chain-like ether, vinylene carbonate, and lithium difluorophosphate. The electrolyte solution may be infiltrated into the separator 20, or the electrolyte solution may be sealed together with a laminate of the negative electrode 10, the separator 20, and the positive electrode 30.

### 1.4.1. Electrolyte

As the electrolyte according to the present embodiment, an electrolyte, which may be included in the polymer electrolyte and the gel electrolyte, in particular, one kind of the above-described lithium salt can be used alone, or two or more kinds thereof can be used in combination. The preferred lithium salt is at least one selected from the group consisting of hexafluorophosphoric acid (LiPF₆) and lithium bis(fluorosulfonyl)imide (LiN(SO₂F)₂). A lithium secondary battery that uses the electrolyte solution containing these electrolytes tends to have excellent battery performance such as cycle characteristics.

The concentration of the electrolyte according to the present embodiment in the electrolyte solution is not particularly limited; however, it is, for example, 0.1 M or more and 6.0 M or less, 0.2 M or more and 5.0 M or less, 0.3 M or more and 4.0 M or less, 0.4 M or more and 3.0 M or less, or 0.5 M or more and 2.0 M or less.

### 1.4.2. Solvent

The solvent of the electrolyte solution according to the present embodiment contains a chain-like carbonate and/or a chain-like ether. The chain-like carbonate is a carbonate that does not have a cyclic structure such as an aromatic ring, an alicyclic ring, a monocyclic ring, or a heterocyclic ring. The chain-like carbonate is not particularly limited, and examples thereof include dimethyl carbonate, diethyl carbonate, ethyl methyl carbonate, ethylene carbonate, propylene carbonate, chloroethylene carbonate, and a compound obtained by substituting a part or all of hydrogen atoms of these carbonates with fluorine. Among these, dimethyl carbonate or ethyl methyl carbonate is preferable. The chain-like ether is an ether that does not have a cyclic structure such as an aromatic ring, an alicyclic ring, a monocyclic ring, or a heterocyclic ring. The chain-like ether is not particularly limited, and examples thereof include 1,1,2,2-tetrafluoroethyl-2,2,3,3-tetrafluoropropyl ether, 1,1,2,2-tetrafluoroethyl-2,2,2-trifluoroethyl ether, 1H,1H,5H-octafluoropentyl-1,1,2,2-tetrafluoroethyl ether, triethylene glycol dimethyl ether, tetraethylene glycol dimethyl ether, dimethoxyethane, diethoxyethane, dimethoxypropane, dimethoxybutane, and diethylene glycol dimethyl ether.

The solvent of the electrolyte solution according to the present embodiment may include other solvents in addition to the above-described chain-like carbonate and chain-like ether. The other solvents are not particularly limited, and examples thereof include a non-aqueous solvent having a fluorine atom (hereinafter, referred to as a "fluorinated solvent") and a non-aqueous solvent having no fluorine atom (hereinafter, referred to as a "non-fluorinated solvent").

The fluorinated solvent as the other solvent is not particularly limited, and examples thereof include a derivative of 1,1,2,2-tetrafluoroethyl-2,2,3,3-tetrafluoropropyl ether, a derivative of 1,1,2,2-tetrafluoroethyl-2,2,2-trifluoroethyl ether, a derivative of 1H,1H,5H-octafluoropentyl-1,1,2,2-tetrafluoroethyl ether, and the like.

The non-fluorinated solvent as the other solvent is not particularly limited, and examples thereof include acetonitrile, methyl acetate, ethyl acetate, propyl acetate, methyl propionate, ethyl propionate, trimethyl phosphate, triethyl phosphate, 12-crown-4, and the like.

In a case where the solvent does not include a chain-like ether but includes a chain-like carbonate, the content of the chain-like carbonate is preferably 40% by volume or more and 100% by volume or less, 50% by volume or more and 100% by volume or less, 60% by volume or more and 100% by volume or less, or 70% by volume or more and 100% by volume or less, with respect to the total amount of the electrolyte solution. In addition, the content thereof is preferably 100% by volume.

In a case where the solvent does not include a chain-like carbonate but includes a chain-like ether, the content of the chain-like ether is preferably 40% by volume or more and 100% by volume or less, 50% by volume or more and 100% by volume or less, 60% by volume or more and 100% by volume or less, or 70% by volume or more and 100% by volume or less, with respect to the total amount of the electrolyte solution. In addition, the content thereof is preferably 100% by volume.

In a case where the solvent includes a chain-like carbonate and a chain-like ether, the total amount of the chain-like carbonate and the chain-like ether is preferably 40% by volume or more and 100% by volume or less, 50% by volume or more and 100% by volume or less, 60% by volume or more and 100% by volume or less, or 70% by volume or more and 100% by volume or less, with respect to the total amount of the electrolyte solution. In addition, the content thereof is preferably 100% by volume.

Regarding the fluorinated solvent and/or the non-fluorinated solvent as the other solvent described above, one kind thereof may be used alone, or two or more kinds thereof can be used in any combination at any proportion. The content of the fluorinated solvent and the content of the non-fluorinated solvent are not particularly limited, and the proportion of the fluorinated solvent to the entire solvent may be 0% by volume or more and 60% by volume or less, and the proportion of the non-fluorinated solvent to the entire solvent may be 0% by volume or more and 60% by volume or less.

### 1.4.3. Additive

The electrolyte solution according to the present embodiment contains vinylene carbonate and lithium difluorophosphate. The content of the vinylene carbonate is preferably 0.1% by mass or more and 5.0% by mass or less, 0.2% by mass or more and 4.5% by mass or less, 0.3% by mass or more and 4.0% by mass or less, 0.4% by mass or more and 3.5% by mass or less, 0.5% by mass or more and 3.0% by mass or less, or 0.6% by mass or more and 2.5% by mass or less with respect to the total amount of the solvent. In a case where the content of the vinylene carbonate is within the above-described range, the performance stability at a high temperature tends to be more excellent.

In addition, the content of the lithium difluorophosphate is preferably 0.1% by mass or more and 5.0% by mass or less, 0.2% by mass or more and 4.5% by mass or less, 0.3% by mass or more and 4.0% by mass or less, 0.4% by mass or more and 3.5% by mass or less, 0.5% by mass or more and 3.0% by mass or less, or 0.6% by mass or more and 2.5% by mass or less with respect to the total amount of the solvent. In a case where the content of the lithium difluorophosphate is within the above-described range, the performance stability at a high temperature tends to be more excellent.

The above-described redox shuttle reaction tends to be capable of being suppressed even in a case where lithium bis(fluorosulfonyl)imide is added, and high performance of the lithium secondary battery, such as a capacity retention rate, tends to be capable of being maintained in a case where a lithium secondary battery in a charged state is stored at a high temperature.

The content of lithium bis(fluorosulfonyl)imide is preferably 0.1% by mass or more and 12.0% by mass or less, 0.5% by mass or more and 10.0% by mass or less, or 1.0% by mass or more and 6.0% by mass or less with respect to the total amount of the solvent.

### 1.5. Use aspect

One use aspect of the lithium secondary battery including an anode-free type battery will be described. In one use aspect of the lithium secondary battery, a positive electrode terminal and a negative electrode terminal for connecting a battery to an external circuit are respectively joined to the positive electrode current collector 32 and the negative electrode current collector 12. In the lithium secondary battery, charge/discharge are carried out by connecting the negative electrode terminal to one end of the external circuit and connecting the positive electrode terminal to the other end of the external circuit. In the positive electrode terminal and the negative electrode terminal, the lithium secondary battery is charged by applying such a voltage that a current flows from the negative electrode terminal (negative electrode) to the positive electrode terminal (positive electrode) through an external circuit. Regarding the lithium secondary battery after charging, the lithium secondary battery is discharged in a case where the positive electrode terminal and the negative electrode terminal are connected through a desired external circuit.

In the anode-free type battery, it is presumed that a solid electrolyte interfacial layer (SEI layer) is formed on the surface of the negative electrode 10 (the interface between the negative electrode 10 and the separator 20) by the initial charging; however, the battery may not have the SEI layer. In a case where the anode-free type battery is charged, the lithium metal is deposited at the interface between the negative electrode 10 and the SEI layer, the interface between the negative electrode 10 and the separator 20, and/or the interface between the SEI layer and the separator 20. In addition, in the anode-free type battery, the lithium metal deposited on the negative electrode 10 is electrolytically dissolved by discharging. In a case where the SEI layer is formed on the battery, the lithium metal deposited at at least one of the interface between the negative electrode 10 and the SEl layer and/or the interface between the SEI layer and the separator 20 is electrolytically dissolved.

### 1.6. Manufacturing method

The manufacturing method for the anode-free type battery is not particularly limited as long as it is a manufacturing method for a lithium secondary battery having the above-described configuration, and examples thereof include the following method.

First, the positive electrode 30 according to the present embodiment is obtained by the above-described manufacturing method for a positive electrode.

Next, the negative electrode 10 according to the present embodiment is obtained by the above-described manufacturing method for a negative electrode. It is noted that the negative electrode 10 of the anode-free type battery does not have a negative-electrode active material.

Both the positive electrode current collector 32 and the negative electrode current collector 12 according to the present embodiment may have a current collector film that includes a resin layer containing polyethylene terephthalate and a metal layer provided on each of both surfaces of the resin layer, only the positive electrode current collector 32 may have the current collector film, the negative electrode current collector 12 may have the metal layer 122 without having the resin layer 120, or only the negative electrode current collector 12 may have the current collector film, and the positive electrode current collector 32 may have the metal layer 322 without having the resin layer 320.

Next, the separator 20 having the above-described configuration is prepared. The separator 20 may be manufactured by a method publicly known in the related art, or a commercially available separator may be used. In addition, a functional buffer layer, which is fibrous or porous and relieves volume expansion and contraction associated with the dissolution and deposition of lithium metal, may be provided between the separator 20 and the negative electrode 10. The functional buffer layer preferably has ion conductivity or electronic conductivity; however, it may not have ion conductivity or electronic conductivity.

A laminate is obtained by laminating the positive electrode 30, the separator 20, and the negative electrode 10 in this order so that the positive electrode 30 and the separator 20 face each other, where the positive electrode 30, the separator 20, and the negative electrode 10 are obtained as described above. An anode-free type battery can be obtained by sealing the obtained laminate together with an electrolyte solution in an airtight container. The airtight container is not particularly limited, and examples thereof include a laminated film.

A plurality of sheets of the positive electrode 30 and a plurality of sheets of the negative electrode 10 may be alternately laminated so that the separator 20 is sandwiched between the positive electrode 30 and the negative electrode 10, and in this case, the battery performance such as energy density tends to be further improved.

### [Lithium ion battery]

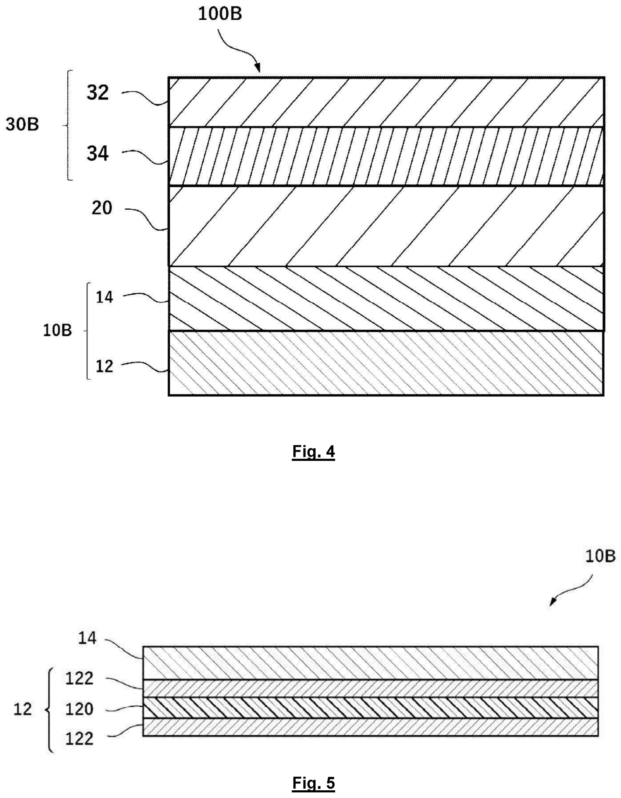

A lithium ion battery 100B which is an example of the lithium secondary battery according to the present embodiment includes, for example, as illustrated in Figure 4, a positive electrode 30 that has a positive electrode current collector 32 and a positive-electrode active material layer 34, a negative electrode 10 that has a negative electrode current collector 12 and a negative-electrode active material layer 14, an electrolyte solution, and a separator 20, wherein the positive electrode current collector 32 and/or the negative electrode current collector 12 has a current collector film that includes a resin layer containing polyethylene terephthalate and a metal layer provided on each of both surfaces of the resin layer, the positive-electrode active material layer 34 includes one or more compounds represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B), and the electrolyte solution contains a chain-like carbonate and/or a chain-like ether, vinylene carbonate, and lithium difluorophosphate.

A lithium ion battery (hereinafter, also referred to as "LIB") has a host material of a lithium element (a lithium ion or a lithium metal) in a negative electrode of the lithium ion battery, where such a material is filled with a lithium element by charging of the battery, and the battery is discharged in a case where the host material releases the lithium element. The LIB is different from the anode-free type battery in terms of the fact that, in particular, the negative electrode has a host material of a lithium element. The materials, the configurations, and the preferred aspects of the positive electrode 30, the electrolyte solution, the separator 20, and the negative electrode 10 are the same as those described above, except for the points which will be described later.

The negative electrode 10 of the LIB is not particularly limited as long as it has a host material of a lithium element (a lithium ion or a lithium metal) as a negative-electrode active material, and the above-described materials, configurations, and the like can be used.

As illustrated in Figure 5, the negative-electrode active material layer 14 may be formed on at least one surface of the negative electrode current collector 12 to form the negative electrode 10B, and the negative-electrode active material layer 14 may be formed on both surfaces of the negative electrode current collector 12 to form the negative electrode 10, which is not illustrated in the drawing.

The average thickness of the negative electrode 10 of the LIB is not particularly limited; however, it is, for example, 5.0 µm or more and 100.0 µm or less. The average thickness thereof is preferably 8.0 µm or more and 50.0 µm or less, 10.0 µm or more and 40.0 µm or less, or 10.0 µm or more and 20.0 µm or less from the viewpoint of improving the capacity and/or energy density of the battery.

The LIB may be produced by a publicly known material and a publicly known production method, or it may be produced in the same manner as the manufacturing method for the above-described anode-free type battery, except that a host material of a lithium element is used for the negative electrode 10.

The manufacturing method for the negative electrode 10 having the negative-electrode active material is not particularly limited; however, it is, for example, as follows. As necessary, the above-described negative-electrode active material, the binder to be described below in detail, a conductive auxiliary agent, and other additives are mixed with each other to obtain a negative electrode active material composition. The negative-electrode active material or the obtained negative electrode active material composition is applied onto both surfaces or one surface of the negative electrode current collector 12, and press molding is carried out to form the negative-electrode active material layer 14 on both surfaces or one surface of the negative electrode current collector 12, thereby obtaining a molded body. The obtained molded body is punched into a predetermined size by punching processing to obtain the negative electrode 10 according to the present embodiment.

**In** addition, in the above-described manufacturing method, a negative electrode current collector 12 consisting of only the metal layer 122 can also be used instead of the negative electrode current collector 12 having the current collector film.

The content of the negative-electrode active material is not particularly limited; however, it is, for example, 60% by mass or more and 100% by mass or less, 70% by mass or more and 99% by mass or less, or 80% by mass or more and 98% by mass or less with respect to the total amount of the negative electrode active material composition.

The binder of the negative electrode active material composition according to the present embodiment is not particularly limited, and examples thereof include the same ones as the binder of the positive electrode active material composition. In addition, the content of the binder in the negative electrode active material composition is not particularly limited; however, it is, for example, approximately the same as the content of the binder in the positive electrode active material composition.

The conductive auxiliary agent of the negative electrode active material composition according to the present embodiment is not particularly limited, and examples thereof include the same ones as the conductive auxiliary agent of the positive electrode active material composition. In addition, the content of the conductive auxiliary agent in the negative electrode active material composition is not particularly limited; however, it is, for example, approximately the same as the content of the conductive auxiliary agent in the positive electrode active material composition.

The method of disposing the negative-electrode active material layer 14 on the negative electrode current collector 12 is not limited to press molding, and examples thereof include a method of allowing a negative electrode active material composition to contain a thermosetting compound and curing the negative electrode active material composition by heating; a method of allowing a negative electrode active material composition to contain a photocurable compound and curing the negative electrode active material composition by irradiation with light, a method of curing a negative electrode active material composition as a two-component curable composition by mixing the two components; and the like.

### [Lithium metal battery]

A lithium metal battery (hereinafter, also referred to as "LMB") which is an example of the lithium secondary battery according to the present embodiment is manufactured by using, as a negative electrode, an electrode having a lithium metal or a lithium metal alloy on a surface of the electrode or a simple body of the lithium metal. In the LMB, similarly to the anode-free type battery, charge/discharge are carried out by depositing the lithium metal on the surface of the negative electrode and electrolytically dissolving the deposited lithium.

The LMB is different from the anode-free type battery in terms of the fact that, before initial charging of the battery, the negative electrode has a lithium metal as the negative-electrode active material.

The lithium metal battery according to the present embodiment includes a positive electrode 30, a negative electrode 10 having a lithium metal facing the positive electrode 30, a separator 20 disposed between the positive electrode 30 and the negative electrode 10, and an electrolyte solution. The materials, the configurations, and the preferred aspects of the positive electrode 30, the electrolyte solution, the separator 20, and the negative electrode 10 are the same as those described above, except for the points which will be described later.

The negative electrode 10 of the LMB is not particularly limited as long as it contains a lithium metal or a lithium metal alloy as a negative-electrode active material, and the above-described material, configuration, and the like can be used. Since the LMB uses the negative electrode 10 having a lithium metal or a lithium metal alloy, which has a large specific capacity and a low redox potential, the LMB is generally a battery having a higher energy density than a lithium ion battery. Examples of such a negative electrode 10 include a lithium metal electrode, an electrode obtained by bonding a lithium metal foil rolled on a surface of a conductive metal foil such as copper to form a clad material, an electrode obtained by electrochemically depositing a lithium metal in advance on a surface of a metal foil such as copper, and an electrode obtained by subjecting metallic lithium to vacuum vapor deposition. From the viewpoint of further improving the effect of the present embodiment, an electrode obtained by bonding a lithium metal foil on a surface of a conductive metal such as copper, or an electrode obtained by electrochemically depositing a lithium metal is preferable, and an electrode obtained by bonding a lithium metal foil on a surface of a conductive metal such as copper is more preferable.

As illustrated in Figure 5, the negative-electrode active material layer 14 may be formed on at least one surface of the negative electrode current collector 12 to form the negative electrode 10B, and the negative-electrode active material layer 14 may be formed on both surfaces of the negative electrode current collector 12 to form the negative electrode 10, which is not illustrated in the drawing.

The average thickness of the negative electrode 10 of the LMB is not particularly limited; however, it is, for example, 5.0 µm or more and 100.0 µm or less. The average thickness thereof is preferably 8.0 µm or more and 50.0 µm or less, 10.0 µm or more and 40.0 µm or less, or 10.0 µm or more and 20.0 µm or less from the viewpoint of improving the capacity and/or energy density of the battery.

The LMB may be produced by a publicly known material and a publicly known production method, or it may be produced in the same manner as the production method for the above-described anode-free type battery, except that a lithium metal or a lithium metal alloy is used as the negative-electrode active material in the negative electrode 10.

The manufacturing method for the negative electrode 10 having the negative-electrode active material is not particularly limited; however, it is, for example, as follows. As necessary, the above-described negative-electrode active material, the binder to be described below in detail, a conductive auxiliary agent, and other additives are mixed with each other to obtain a negative electrode active material composition. The negative-electrode active material or the obtained negative electrode active material composition is applied onto both surfaces or one surface of the negative electrode current collector 12, and press molding is carried out to form the negative-electrode active material layer 14 on both surfaces or one surface of the negative electrode current collector 12, thereby obtaining a molded body. The obtained molded body is punched into a predetermined size by punching processing to obtain the negative electrode 10 according to the present embodiment.

**In** addition, in the above-described manufacturing method, a negative electrode current collector 12 consisting of only the metal layer 122 can also be used instead of the negative electrode current collector 12 having the current collector film.

The content of the negative-electrode active material is not particularly limited; however, it is, for example, 60% by mass or more and 100% by mass or less, 70% by mass or more and 99% by mass or less, or 80% by mass or more and 98% by mass or less with respect to the total amount of the negative electrode active material composition.

The binder of the negative electrode active material composition according to the present embodiment is not particularly limited, and examples thereof include the same ones as the binder of the positive electrode active material composition. In addition, the content of the binder in the negative electrode active material composition is not particularly limited; however, it is, for example, approximately the same as the content of the binder in the positive electrode active material composition.

The conductive auxiliary agent of the negative electrode active material composition according to the present embodiment is not particularly limited, and examples thereof include the same ones as the conductive auxiliary agent of the positive electrode active material composition. In addition, the content of the conductive auxiliary agent in the negative electrode active material composition is not particularly limited; however, it is, for example, approximately the same as the content of the conductive auxiliary agent in the positive electrode active material composition.

The method of disposing the negative-electrode active material layer 14 on the negative electrode current collector 12 is not limited to press molding, and examples thereof include a method of allowing a negative electrode active material composition to contain a thermosetting compound and curing the negative electrode active material composition by heating; a method of allowing a negative electrode active material composition to contain a photocurable compound and curing the negative electrode active material composition by irradiation with light; a method of curing a negative electrode active material composition as a two-component curable composition by mixing the two components; and the like.

### [Examples]

Hereinafter, the present invention will be described in more detail with reference to examples and comparative examples. The present invention is not limited by the following examples. In addition, unless otherwise specified, the procedures in the Examples were carried out at room temperature (25°C) and 10⁵ Pa.

### 1. Production of lithium ion secondary battery

A lithium ion secondary battery of each of the examples and the comparative examples was produced as follows.

### 1.1. Production of negative electrode

As the negative electrode current collector 12, a current collector film obtained by subjecting Cu as the metal layer 122 to vapor deposition to have a thickness of 1.0 µm on both surfaces of a film-shaped polyethylene terephthalate (PET) having a thickness of 6 µm, which was the resin layer 120, was prepared. Then, a negative electrode active material composition obtained by mixing, in water as a solvent, 97.0 parts by mass of graphite as a negative-electrode active material, 0.5 parts by mass of carbon black as a conductive auxiliary agent, and as a binder, 1.5 parts by mass of carboxymethyl cellulose (CMC) and 1.0 parts by mass of styrene-butadiene rubber (SBR), was prepared. One surface of the negative electrode current collector 12 was coated with this negative-electrode active material composition so that the weight per unit area was 15 mg/cm², and then pressed to form the negative-electrode active material layer 14 on one surface of the negative electrode current collector 12, thereby obtaining a molded body. This molded body was cut out to a predetermined size (4 x 4 cm). In this manner, the negative electrode 10 was obtained. It is noted that in Table 1, this negative electrode 10 is referred to as a "current collector film type".

Alternatively, as the negative electrode current collector 12, a copper foil having a thickness of 8 µm was prepared, one surface of this copper foil was coated with the above-described negative electrode active material composition in the same manner as described above, and pressed to form the negative-electrode active material layer 14 on one surface of the negative electrode current collector 12, thereby obtaining a molded body. This molded body was cut out to a predetermined size (4 x 4 cm). In this manner, the negative electrode 10 was obtained. It is noted that in Table 1, this negative electrode 10 is referred to as a "metal type".

### 1.2. Production of positive electrode

As the positive electrode current collector 32, a current collector film obtained by subjecting Al as the metal layer 322 to vapor deposition to have a thickness of 1.0 µm on both surfaces of a film-shaped PET having a thickness of 6.0 µm, which was the resin layer 320, was used. Then, a positive electrode active material composition obtained by mixing 96 parts by mass of LiNi_{0.8}Co_{0.15}Al_{0.05}O₂ as a positive-electrode active material, 2 parts by mass of carbon black as a conductive auxiliary agent, and 2 parts by mass of polyvinylidene fluoride (PVDF) as a binder in N-methyl-pyrrolidone (NMP) as a solvent, was prepared. One surface of the positive electrode current collector 32 was coated with this positive electrode active material composition so that the weight per unit area was 23 mg/cm², and then pressed to form the positive-electrode active material layer 34 on one surface of the positive electrode current collector 32, thereby obtaining a molded body. This molded body was cut out to a predetermined size (4 x 4 cm). In this manner, the positive electrode 30 was obtained. It is noted that in Table 1, this positive electrode 30 is referred to as a "current collector film type".

### 1.3. Preparation of separator

A sheet (thickness: 15 µm, 4 x 4 cm) of a polyethylene microporous membrane, the surface of which was coated with a mixture of polyvinylidene fluoride (PVDF) and Al₂O₃, was prepared as the separator 20.

### 1.4. Preparation of electrolyte solution

One or more selected from the group consisting of lithium hexafluorophosphate (LiPF₆) and lithium bis(fluorosulfonyl)imide (LiFSI) was dissolved at the concentrations shown in Table 1 in a solvent obtained by mixing one or more selected from the group consisting of ethylene carbonate (EC), dimethyl carbonate (DMC), and ethyl methyl carbonate (EMC) at a volume ratio shown in Table 1. In addition, one or more selected from the group consisting of lithium difluorophosphate (LiPO₂F₂) and vinylene carbonate (VC) were added to the solvent so that the content proportion with respect to the total amount of the solvent (the total mass of one or more selected from the group consisting of EC, DMC, and EMC, which does not include LiPF₆ and LiFSI) was the value shown in Table 1. In this way, the electrolyte solution was adjusted.

### 1.5. Assembly of battery

A laminate was obtained by laminating the positive electrode 30, the separator 20, and the negative electrode 10 in this order so that the positive electrode 30 and the separator 20 faced each other, where the positive electrode 30, the separator 20, and the negative electrode 10 were obtained as described above. Further, an Al terminal having a size of 100 µm and a Ni terminal having a size of 100 µm were respectively joined to the positive electrode current collector 32 and the negative electrode current collector 12 by ultrasonic welding, which was followed by insertion into the exterior body of the laminate. Next, the electrolyte solution obtained as described above was injected into the exterior body. By sealing the exterior body, a lithium ion secondary battery of each of the examples and the comparative examples was obtained.

### 2. Evaluation

### 2.1. Capacity retention rate (performance stability at high temperature)

The lithium ion secondary battery of each of the examples and the comparative examples was subjected to CC charging at a current of 6 mA in a constant-temperature tank at 25°C until the voltage reached 4.2 V, and then subjected to CV charging at 4.2 V until the charging current reached 3 mA. Thereafter, CC discharging was carried out at a current of 6 mA until the voltage reached 2.7 V, and the obtained discharge capacity was defined as the rated capacity (mAh). It is noted that the CC charging is charging which is carried out at a constant current value, the CC discharging is discharging which is carried out at a constant current value, and the CV charging is charging which is carried out at a constant voltage.

Next, the lithium ion secondary battery of each of the examples and the comparative examples was subjected to CC charging at a current of 6 mA in a constant-temperature tank at 25°C until the voltage reached 4.2 V, and then subjected to CV charging at 4.2 V until the charging current reached 3 mA. Thereafter, a tape for short-circuit prevention was attached to the terminals, and then the lithium ion secondary battery was taken out from a constant-temperature tank at 25°C and put into a constant-temperature tank at 60°C. After being allowed to stand in a constant-temperature tank at 60°C for 2 weeks, the lithium ion secondary battery of each of the examples and the comparative examples was taken out from the constant-temperature tank at 60°C, and then CC discharging was carried out at a current of 6 mA until the voltage reached 2.7 V. The obtained discharge capacity was defined as the residual capacity (mAh), and [residual capacity]/[rated capacity] x 100 was defined as the capacity retention rate (%) after high-temperature storage, which was described in the column of the capacity retention rate in Table 1.

**[Table 1]**

| Example | Electrolyte solution | | | | | | | Positive electrode | Negative electrode | Capacity retention rate |
|---|---|---|---|---|---|---|---|---|---|---|
| | EC (% by volume) | DMC (% by volume) | EMC (% by volume) | LiPF₆ (M) | LiFSI (M) | LiPO₂F₂ (% by weight) | VC (% by weight) | | | |
| Example 1 | 30 | 70 | 0 | 1 | 0 | 1 | 2 | Current collector film type | Metal type | 83% |
| Example 2 | 30 | 70 | 0 | 1 | 0 | 1 | 1 | Current collector film type | Metal type | 80% |
| Example 3 | 30 | 70 | 0 | 1 | 0 | 0.3 | 2 | Current collector film type | Metal type | 80% |
| Example 4 | 30 | 35 | 35 | 1 | 0 | 1 | 3 | Current collector film type | Metal type | 82% |
| Example 5 | 30 | 70 | 0 | 1 | 0 | 1 | 2 | Current collector film type | Current collector film type | 83% |
| Example 6 | 30 | 35 | 35 | 0.7 | 0.3 | 1 | 2 | Current collector film type | Metal type | 86% |
| Comparative Example 1 | 30 | 70 | 0 | 1 | 0 | 0 | 0 | Current collector film type | Metal type | 59% |
| Comparative Example 2 | 30 | 70 | 0 | 1 | 0 | 0 | 2 | Current collector film type | Metal type | 72% |
| Comparative Example 3 | 30 | 70 | 0 | 1 | 0 | 1 | 0 | Current collector film type | Metal type | 70% |

### 3. Evaluation results

From Table 1, it can be seen that in the lithium secondary battery of each of Examples 1 to 6, which has a positive electrode 30 that has a positive electrode current collector 32 and a positive-electrode active material layer 34, a negative electrode 10 that has a negative electrode current collector 12, an electrolyte solution, and a separator 20, where the positive electrode current collector 32 and/or the negative electrode current collector 12 has a current collector film that includes a resin layer containing polyethylene terephthalate and a metal layer provided on each of both surfaces of the resin layer, the positive-electrode active material layer 34 includes one or more compounds represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B), and the electrolyte solution contains a chain-like carbonate and/or a chain-like ether, vinylene carbonate, and lithium difluorophosphate, an excellent capacity retention rate is exhibited as compared with the comparative examples of the lithium secondary batteries which are different from the lithium secondary batteries of Examples 1 to 6, even in a case where a lithium secondary battery in a charged state is stored at a high temperature.

### Industrial Applicability

The lithium secondary battery according to the present invention exhibits an excellent capacity retention rate even in a case of being stored at a high temperature, and thus has industrial applicability as a power storage device which is used for various applications.

### Reference Signs List

100, 100A, 100B: lithium secondary battery
10, 10B, 10C: negative electrode
12: negative electrode current collector
120: resin layer
122: metal layer
14: negative-electrode active material layer
20: separator
30, 30B: positive electrode
32: positive electrode current collector
320: resin layer
322: metal layer
34: positive-electrode active material layer

## Claims

1. A lithium secondary battery comprising:
a positive electrode that has a positive electrode current collector and a positive-electrode active material layer;
a negative electrode that has a negative electrode current collector;
an electrolyte solution; and
a separator,
wherein the positive electrode current collector and/or the negative electrode current collector has a current collector film that includes a resin layer containing polyethylene terephthalate and a metal layer provided on each of both surfaces of the resin layer,
the positive-electrode active material layer contains one or more compounds represented by a general formula: Li_{z}NiₓCo_{y}M_{1-x-y}O_{2+α} (here, 0.5 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B), and
the electrolyte solution contains a chain-like carbonate and/or a chain-like ether, vinylene carbonate, and lithium difluorophosphate.

2. The lithium secondary battery according to Claim 1, wherein the positive-electrode active material layer contains one or more compounds represented by a general formula: Li_{z}NiₓCo_{y}M_{1-x-y}O_{2+α} (here, 0.7 ≤ x ≤ 1.0, 0 ≤ y ≤ 0.35, 0.9 ≤ z ≤ 1.3, -0.2 ≤ α ≤ 0.15, and M is one or more elements selected from the group consisting of Mn, Al, V, Mg, Mo, Nb, Ti, Zr, Fe, Cu, Cr, Zn, F, and B).

3. The lithium secondary battery according to Claim 1, wherein the electrolyte solution contains the chain-like carbonate, and
the chain-like carbonate includes ethyl methyl carbonate and/or dimethyl carbonate.

4. The lithium secondary battery according to Claim 1, wherein a content of the vinylene carbonate is 0.1% by mass or more and 5.0% by mass or less with respect to a total amount of a solvent contained in the electrolyte solution, and
a content of the lithium difluorophosphate is 0.1% by mass or more and 5.0% by mass or less with respect to the total amount of the solvent contained in the electrolyte solution.

5. The lithium secondary battery according to Claim 1, wherein the electrolyte solution further contains lithium hexafluorophosphate and/or lithium bis(fluorosulfonyl)imide.
